# EUROPÄISCHE PATENTSCHRIFT

(11) **EP 2 180 931 B1**
(45) Veröffentlichungstag und Bekanntmachung des Hinweises auf die Patenterteilung: **02.12.2015**
(21) Anmeldenummer: 08773514.8
(22) Anmeldetag: 19.06.2008
(51) Int. Cl.: B01D 29/11, B01D 29/21, B01D 39/08, B01D 39/12

(54) **GEWELLTES ODER GEFALTETES FLACHMATERIAL**
CORRUGATED OR FOLDED FLAT MATERIAL
MATÉRIAU PLAT ONDULÉ OU PLISSÉ

(30) Priorität: 24.08.2007 DE 102007040892
(43) Veröffentlichungstag der Anmeldung: 05.05.2010
(73) Patentinhaber: FSP Fluid Systems Partners Holding AG, 6340 Baar (CH)
(72) Erfinder: SCHINDELIN, Andreas, 71665 Vaihingen an der Enz (DE); SCHADT, Wolfram, 76703 Kraichtal (DE)
(74) Vertreter: Hoeger, Stellrecht & Partner Patentanwälte mbB
(86) Internationale Anmeldenummer: PCT/EP2008/004929
(87) Internationale Veröffentlichungsnummer: WO 2009/026978

(56) Entgegenhaltungen:
- US-A- 5 084 178
- US-A- 6 113 784
- US-B1- 6 910 589

## Beschreibung

Die Erfindung betrifft ein gewelltes oder gefaltetes Flachmaterial mit einer Vielzahl von parallel zueinander verlaufenden Falten oder Wellen, die aufeinander folgend eine Falten- oder Wellenspitze und einen Falten- oder Wellengrund definieren, welche über eine Falten- oder Wellenflanke miteinander verbunden sind, wobei das Flachmaterial von einem Fluid durchströmbar ist und mindestens eine verformbare Funktionsschicht aufweist, die in Durchströmungsrichtung des Fluids auf einer ein verformbares Stützgewebe aufweisenden Stützschicht aufliegt, wobei mittels der Funktionsschicht Fremdstoffe aus dem Fluid entfernbar oder diesem zuführbar sind.

Mittels derartiger Flachmaterialien kann einem Fluid, beispielsweise einer Flüssigkeit, ein Fremdstoff, insbesondere eine Chemikalie, mittels Desorption zugeführt werden. Hierzu kann die Funktionsschicht des Flachmaterials mit der Chemikalie getränkt werden, wobei die Chemikalie beim Durchströmen des Fluids von letzterem gelöst wird. Flachmaterialien der eingangs genannten Art eignen sich darüber hinaus dazu, Fremdstoffe oder Chemikalien aus dem hindurchströmenden Fluid zu entfernen, beispielsweise durch Adsorption, Absorption oder Filterung. Die Funktionsschicht kann Fremdstoffe, beispielsweise verunreinigende Partikel, zurückhalten, so dass der Gehalt an Fremdstoffen im Fluid durch das Hindurchströmen durch die Funktionsschicht reduziert werden kann.

Das Hindurchströmen ist mit einem Druckverlust des Fluids verbunden, d. h. der Druck des Fluids auf der Anströmseite des Flachmaterials ist größer als auf der Abströmseite, und der Druckverlust führt zu einer mechanischen Belastung der Funktionsschicht. Um Beeinträchtigungen der Funktionsschicht zu vermeiden, wird diese mittels einer Stützschicht abgestützt, auf der die Funktionsschicht aufliegt. Die Stützschicht ist gitterartig ausgestaltet, beispielsweise in Form eines Gewebes.

Um die wirksame Fläche des Flachmaterials zu erhöhen, wird dieses üblicherweise gefaltet oder gewellt, denn dadurch kann die effektiv nutzbare Fläche erhöht werden, ohne dass die Außenabmessungen des Flachmaterials entsprechend vergrößert werden müssen. Die Belastung des Flachmaterials durch das hindurchströmende Fluid kann allerdings zur Folge haben, dass sich die Falten oder Wellen insbesondere auf der Abströmseite des Flachmaterials dicht aneinander legen. Dies erhöht den Durchflusswiderstand des Flachmaterials und damit den Druckverlust, den das hindurchströmende Fluid erleidet.

Bei einem als Siebkörper ausgestalteten Flachmaterial wird deshalb in der US-Patentschrift Nr. 3,057,481 vorgeschlagen, das Stützgewebe möglichst steif und unverformbar auszugestalten. Hierzu wird das Flachmaterial gesintert, so dass sich die Funktionsschicht mit der Stützschicht starr verbindet. Hierzu sind allerdings verhältnismäßig dicke Filamente für die als Gewebe ausgebildete Stützschicht erforderlich und dies wiederum erhöht den Druckverlust, den das hindurchströmende Fluid erfährt. Außerdem besteht bei derartigen Flachmaterialien die Gefahr, dass sie insbesondere bei wechselnden Druckbelastungen mechanische Beeinträchtigungen erleiden, beispielsweise durch Rissbildung. Ein weiterer Nachteil liegt darin, dass bei einer derartigen Ausgestaltung nur sinterbare Funktionsschichten verwendet werden können.

In der DE 197 37 954 A1 wird zur Vermeidung einer sogenannten Paketbildung, also des dichten Aneinanderliegens der Falten oder Wellen des Flachmaterials, der Einsatz einer zusätzlichen Stützstruktur mit mindestens einem Stützwulst vorgeschlagen, der sich quer zu den Falten erstreckt, beispielsweise in Form einer Wendel. Hierbei handelt es sich um eine verhältnismäßig aufwändige Konstruktion, die mit nicht unbeträchtlichen Herstellungskosten verbunden ist.

Das Dokument US 6 113 784 A offenbart ein gefaltetes Flachmaterial mit einer Vielzahl von parallel zueinander verlaufend en Falten, welche über eine Faltenflanke miteinander verbunden sind. Das Flachmaterial weist mindestens eine verformbare Filtrationsschicht (12) auf, die in Durchströmungsrichtung eines Fluids auf einer ein verformbares Stützgewebe (Netz) aufweisenden Stützschicht (14) aufliegt.

Aufgabe der vorliegenden Erfindung ist es, ein gewelltes oder gefaltetes Flachmaterial der eingangs genannten Art derart weiterzubilden, dass es eine höhere mechanische Belastbarkeit und einen geringeren Durchflusswiderstand aufweist.

Diese Aufgabe wird bei einem Flachmaterial der gattungsgemäßen Art erfindungsgemäß dadurch gelöst, dass das Stützgewebe eine Köperbindung aufweist.

In die Erfindung fließt der Gedanke mit ein, dass die mechanische Belastbarkeit des gewellten oder gefalteten Flachmaterials gesteigert werden kann, indem zusätzlich zur Funktionsschicht auch das Stützgewebe verformbar ausgestaltet ist. Dadurch kann die Gefahr einer Beschädigung bei Druckwechselbelastungen reduziert werden. Trotz der hohen mechanischen Belastbarkeit zeichnet sich das erfindungsgemäße Flachmaterial durch einen geringeren Durchflusswiderstand aus. Dies wird darauf zurückgeführt, dass das Stützgewebe eine Köperbindung aufweist. Diese zeichnet sich dadurch aus, dass der Schussfaden des Stützgewebes unter mindestens einem Kettfaden des Stützgewebes hindurchführt, danach über mindestens zwei Kettfäden hinweggeht, um dann wieder unter mindestens einem Kettfaden hindurchgeführt zu werden. Alternativ kann der Schussfaden unter mindestens zwei Kettfäden hindurchgeführt sein und dann über mindestens einen Kettfaden hinweggehen. Der unmittelbar benachbarte Schussfaden verlagert diesen Rhythmus um mindestens einen Kettfaden zur Seite. Dadurch entsteht ein typisches Diagonalmuster, das sich durch diagonal verlaufende Grate auszeichnet. Es hat sich gezeigt, dass durch Einsatz einer Köperbindung für das Stützgewebe der Durchflusswiderstand des Flachmaterials verringert werden kann.

Von besonderem Vorteil ist es, wenn in Abströmrichtung hervorstehende Faden- oder Filamentabschnitte des Stützgewebes, das heißt abströmseitige Ketthebungen und/oder Schusshebungen, also Bereiche, in denen die Kettfäden bzw. die Schussfäden auf der abströmseitigen Gewebeoberseite angeordnet sind, im Bereich einander zugewandter Falten- oder Wellenflanken des Flachmaterials bei Belastung durch das hindurchströmende Fluid zumindest bereichsweise aneinander anliegen. Dadurch, so wurde festgestellt, bilden sich zwischen abströmseitig einander zugewandten Falten- oder Wellenflanken stabile Mikrokanäle aus, die einen Durchfluss des Fluids mit sehr deutlich verringerten Strömungsverlusten ermöglichen. Bei einer derartigen Ausführungsform können in Abkehr von einer möglichst starren Ausgestaltung des gewellten oder gefalteten Flachmaterials, wie sie aus dem Stand der Technik bekannt ist, abströmseitig einander zugewandte Falten- oder Wellenflanken des Stützgewebes, also die abströmseitigen Bereiche zwischen einem Falten- oder Wellengrund und einer Falten- oder Wellenspitze, aneinander anliegen und sich dadurch gegenseitig abstützen, wenn sie einer Belastung durch das hindurchströmende Fluid ausgesetzt sind. Trotz dieser gegenseitigen Anlage der Falten- oder Wellenflanken kann der Durchflusswiderstand, den das Flachmaterial dem Fluid entgegensetzt, gering gehalten werden, denn die abströmseitige Anlage einander zugewandter Falten- oder Wellenflanken erfolgt in der Weise, dass lediglich in Abströmrichtung hervorstehende Faden- oder Filamentabschnitte des Stützgewebes gegenseitig zur Anlage gelangen, wobei sich gleichzeitig stabile Mikrokanäle ausbilden, durch die das Fluid hindurchströmen kann.

Die Ausbildung von stabilen Mikrokanälen auf der Abströmseite des Stützgewebes führt zu einer beträchtlichen Reduzierung des Durchflusswiderstandes. Wird das in einer Köperbindung gewebte Stützgewebe gefaltet oder gewellt und dann von einem Fluid durchströmt, so können auf der Abströmseite einander zugewandte Faltenflanken bzw. Wellenflanken zumindest bereichsweise aneinander anliegen, sofern entsprechende Differenzdrücke vorliegen. Die Anlage erfolgt dann aber dergestalt, dass lediglich abströmseitig hervorstehende Faden- oder Filamentabschnitte punkt- oder linienförmig aneinander liegen unter Ausbildung von stabilen Mikrokanälen, die sich in Richtung vom Falten- oder Wellengrund zur Falten- oder Wellenspitze erstrecken. Einander benachbarte Falten oder Wellen des Stützgewebes können sich somit abströmseitig aneinander abstützen, ohne dass das Stützgewebe beschädigt wird, und gleichzeitig kann das Fluid durch die stabilen Mikrokanäle zwischen den aneinander anliegenden Faltenflanken hindurchströmen. Die Köperbindung stellt hierbei sicher, dass eine Relativbewegung der einander zugewandten hervorstehenden Faden- oder Filamentabschnitte die Mikrokanäle nicht beeinträchtigt.

Von besonderem Vorteil ist es, wenn das Flachmaterial einen hohlzylindrischen, in Umfangsrichtung in sich geschlossenen Balg ausbildet mit axial verlaufenden Falten- oder Wellenspitzen und Falten- oder Wellengründen, wobei der Balg in radialer Richtung vom Fluid durchströmbar ist. Die balgförmige Ausgestaltung verleiht dem Flachmaterial eine besonders hohe mechanische Stabilität, wobei gleichzeitig eine große effektiv nutzbare Fläche bereitgestellt werden kann. Das balgförmig in Form eines Hohlzylinders ausgestaltete Flachmaterial kann an den Stirnseiten des Balges mittels geeignet geformter Haltescheiben mechanisch abgestützt sein. Zusätzlich kann ein kolinear zur Zylinderachse des Balges ausgestaltetes Stützrohr mit einer Vielzahl von Durchbrechungen zum Einsatz kommen, das das Flachmaterial abströmseitig abstützt.

Das Stützgewebe weist bei einer vorteilhaften Ausgestaltung der Erfindung parallel zu den Falten oder Wellen verlaufende Fäden aus Metall und senkrecht zu den Falten oder Wellen verlaufende Fäden aus einem Kunststoffmaterial auf. Durch die Bereitstellung von metallenen Fäden können beim Hindurchströmen des Fluids im Bereich des Stützgewebes auftretende elektrische Ladungen auf einfache Weise abgeführt werden, so dass eine statische Aufladung des Stützgewebes und damit des gesamten Flachmaterials verhindert werden kann. Die metallenen Fäden verlaufen parallel zu den Falten oder Wellen des Flachmaterials und unterliegen daher keiner wesentlichen Biegebelastung. Die Gefahr, dass die elektrisch leitfähigen Fäden bei auftretenden Druckwechselbelastungen brechen, kann dadurch sehr gering gehalten werden. Die quer zu den Falten oder Wellen verlaufenden Fäden sind aus einem Kunststoffmaterial hergestellt. Diese lassen sich ohne Gefahr einer mechanischen Beeinträchtigung leicht biegen entsprechend der falten- oder wellenförmigen Ausgestaltung des Flachmaterials, ohne dass die Gefahr besteht, dass die aus Kunststoff gefertigten Fäden brechen.

Es kann vorgesehen sein, dass die Schussfäden des Stützgewebes parallel zu den Falten oder Wellen und die Kettfäden senkrecht zu den Falten oder Wellen verlaufen. Die Schussfäden sind bei einer derartigen Ausgestaltung bevorzugt aus Metall gefertigt und für die Kettfäden kommt vorzugsweise ein Kunststoffmaterial zur Herstellung zum Einsatz.

Von besonderem Vorteil ist es, wenn die Fadendichte der parallel zu den Falten oder Wellen verlaufenden Fäden des Stützgewebes kleiner ist als die Fadendichte der senkrecht zu den Falten oder Wellen verlaufenden Fäden des Stützgewebes, denn dadurch kann der Durchflusswiderstand des Fluids besonders gering gehalten werden. Dies gilt insbesondere im Falle der Ausbildung der voranstehend erläuterten Mikrokanäle, denn diese verlaufen senkrecht zu den Falten bzw. Wellen des Stützgewebes.

Vorzugsweise beträgt die Fadendichte der parallel zu den Falten oder Wellen verlaufenden Fäden maximal 80 % der Fadendichte der senkrecht zu den Falten oder Wellen verlaufenden Fäden des Stützgewebes.

Zur Verringerung des Durchflusswiderstandes für das Fluid ist es von Vorteil, wenn die Maschenweite der parallel zu den Falten oder Wellen verlaufenden Fäden größer ist als die Maschenweite der senkrecht zu den Falten oder Wellen verlaufenden Fäden. Bevorzugt ist die Maschenweite der parallel zu den Falten oder Wellen verlaufenden Fäden mindestens 10 %, insbesondere mindestens 25 % bis 100 % größer als die Maschenweite der senkrecht zu den Falten oder Wellen verlaufenden Fäden.

Wie eingangs erwähnt, kann das gewellte oder gefaltete Flachmaterial in vielfältiger Weise zum Entfernen oder Zuführen von Fremdstoffen zum Einsatz kommen. Beispielsweise können mittels des Flachmaterials Fremdstoffe aus dem Fluid gefiltert werden. Hierzu weist die Funktionsschicht des Flachmaterials ein Filtermaterial auf. Das Filtermaterial kann beispielsweise aus Papier oder einem Vliesstoff gefertigt sein. Es ist bevorzugt derart ausgestaltet, dass der Abscheidegrad für Partikel, die größer sind als die mit der Filterfeinheit definierte Nennpartikelgröße, mindestens 99,5 % beträgt. Die Nennpartikelgröße liegt dabei bevorzugt im Bereich kleiner 100 µm. Im Gegensatz zum Filtermaterial weist das Stützgewebe praktisch keine Filterfunktion auf. Das Filtermaterial kann deutlich feiner ausgestaltet sein als das Stützgewebe. Die Maschenweite des Stützgewebes kann beispielsweise mindestens 200 µm, vorzugsweise etwa 1000 µm betragen.

Von besonderem Vorteil ist es, wenn die Funktionsschicht mehrlagig ausgestaltet ist. Beispielsweise kann die Funktionsschicht eine mittige Schicht in Form eines Vlieses aufweisen, das aus einem Kunststoff- oder Glasfasermaterial gefertigt ist und das flächig an anströmseitigen und abströmseitigen Schutzvliesen anliegt.

Günstig ist es, wenn die Anzahl der Ketthebungen und Kettsenkungen des Stützgewebes gleich sind. Gewebe mit einer Köperbindung, bei denen die Anzahl der Ketthebungen und Kettsenkungen gleich ist, werden auch als Gleichgratköper bezeichnet. Die Kett- und Schussfäden verteilen sich bei einer derartigen Ausgestaltung gleichmäßig über die Oberfläche des Gewebes. Derartige Köpergewebe werden deshalb auch als gleichsinnig bezeichnet.

Köperbindungen sind an ihrem schräg verlaufenden Grat erkennbar, dieser kann von links oben nach rechts unten (so genannter S-Grat-Köper) oder von links unten nach rechts oben verlaufen (so genannter Z-Grat-Köper). Von Vorteil ist es, wenn das Stützgewebe eine Köperbindung mit unterschiedlicher Richtung des Grates aufweist, nämlich einen so genannten Wechselköper. Dieser zeichnet sich durch eine besonders hohe mechanische Stabilität aus.

Der Durchmesser der Fäden des Stützgewebes beträgt bevorzugt maximal 60 % der Maschenweite. Dem Stützgewebe kann dadurch ein großer Anteil an offener Fläche verliehen werden, so dass es praktisch keine Filterfunktion aufweist.

Vorzugsweise haben die parallel zu den Falten oder Wellen des Flachmaterials ausgerichteten Fäden eine geringere Fadenstärke als die Fäden, die senkrecht zu den Falten oder Wellen ausgerichtet sind. Insbesondere kann die Fadenstärke der parallel verlaufenden Fäden mindestens 10 %, bevorzugt mindestens 25 % bis 50 % kleiner sein als die Fadenstärke der senkrechten Fäden.

Bei einer bevorzugten Ausgestaltung weist das Flachmaterial auch auf der Anströmseite der Funktionsschicht ein Gewebe mit Köperbindung auf. Dies hat unter anderem den Vorteil, dass auch anströmseitig stabile Mikrokanäle geschaffen werden können zur Verringerung des Durchflusswiderstandes.

Die Erfindung betrifft auch die Verwendung eines Stützgewebes zum abströmseitigen Abstützen einer gefalteten oder gewellten Funktionsschicht mit einer Vielzahl von parallel zueinander verlaufenden Falten oder Wellen, die aufeinanderfolgend eine Falten- oder Wellenspitze und einen Falten- oder Wellengrund definieren, welche über eine Faltenflanke miteinander verbunden sind, wobei die Funktionsschicht verformbar ist und von einem Fluid durchströmbar ist, wobei mittels der Funktionsschicht Fremdstoffe aus dem Fluid entfernbar oder diesem zuführbar sind und das Stützgewebe abströmseitig an der Funktionsschicht anliegt und ebenso wie die Funktionsschicht gefaltet oder gewellt ist, und wobei das Stützgewebe verformbar ist und eine Köperbindung aufweist.

Wie bereits erläutert, kann durch die Verwendung eines derartigen Stützgewebes die mechanische Belastbarkeit der Kombination aus Funktionsschicht und Stützgewebe erhöht und der Durchflusswiderstand verringert werden.

Von besonderem Vorteil ist die Verwendung eines Stützgewebes mit Köperbindung, bei dem in Abströmrichtung hervorstehende Faden- oder Filamentabschnitte im Bereich einander zugewandter Falten- oder Wellenflanken bei Belastung durch das hindurchströmende Fluid zumindest bereichsweise aneinander anliegen, da sich im Bereich der aneinander anliegenden Falten- oder Wellenflanken des Stützgewebes stabile Mikrokanäle ausbilden, durch die das Fluid mit sehr deutlich verringertem Strömungsverlust hindurchströmen kann.

Vorzugsweise verwendet man ein Stützgewebe mit parallel zu den Falten oder Wellen verlaufenden Fäden aus Metall und senkrecht zu den Falten oder Wellen verlaufenden Fäden aus einem Kunststoffmaterial. Wie bereits erläutert, kann dadurch eine statische Aufladung des Stützgewebes und der Funktionsschicht vermieden werden und gleichzeitig ist die Gefahr gering, dass die aus Metall gefertigten Fäden brechen.

Von Vorteil ist es, wenn ein Stützgewebe verwendet wird mit Schussfäden, die parallel zu den Falten oder Wellen verlaufen, und mit Kettfäden, die senkrecht zu den Falten oder Wellen verlaufen.

Verwendet werden derartige Stützgewebe insbesondere in Kombination mit Funktionsschichten, die ein Filtermaterial aufweisen, beispielsweise eine Vlies- oder Papierschicht. Die Funktionsschicht kann mehrlagig ausgestaltet sein.

Für die Verwendung des Stützgewebes zum abströmseitigen Abstützen einer gefalteten oder gewellten Funktionsschicht ist es günstig, wenn die Fadendichte und/oder die Fadenstärke der parallel zu den Falten oder Wellen des Stützgewebes verlaufenden Fäden des Stützgewebes geringer ist als die Fadendichte bzw. Fadenstärke der senkrecht zu den Falten oder Wellen verlaufenden Fäden. Beispielsweise kann die Fadendichte oder die Fadenstärke der parallel zu den Falten oder Wellen verlaufenden Fäden maximal 80 % der Fadendichte bzw. Fadenstärke der senkrecht zu den Falten oder Wellen verlaufenden Fäden betragen.

Vorzugsweise verwendet man ein Stützgewebe, das praktisch keine Filterfunktion aufweist.

Die nachfolgende Beschreibung einer bevorzugten Ausführungsform der Erfindung dient im Zusammenhang mit der Zeichnung der,näheren Erläuterung. Es zeigen:
- Figur 1:: einen Halbschnitt eines Filterelementes mit einem erfindungsgemäßen gefalteten Flachmaterial;
- Figur 2:: eine vergrößerte Darstellung des in Figur 1 zum Einsatz kommenden Flachmaterials;
- Figur 3:: eine Schnittansicht eines an sich bekannten Stützgewebes mit Leinwandbindung;
- Figur 4:: eine Schnittansicht eines erfindungsgemäß zum Einsatz kommenden Stützgewebes mit Köperbindung;
- Figur 5:: eine Schnittansicht von zwei aufeinander liegenden Lagen eines an sich bekannten Stützgewebes mit Leinwandbindung;
- Figur 6:: eine Schnittansicht von zwei aufeinander liegenden Lagen des erfindungsgemäß zum Einsatz kommenden Stützgewebes mit Köperbindung.

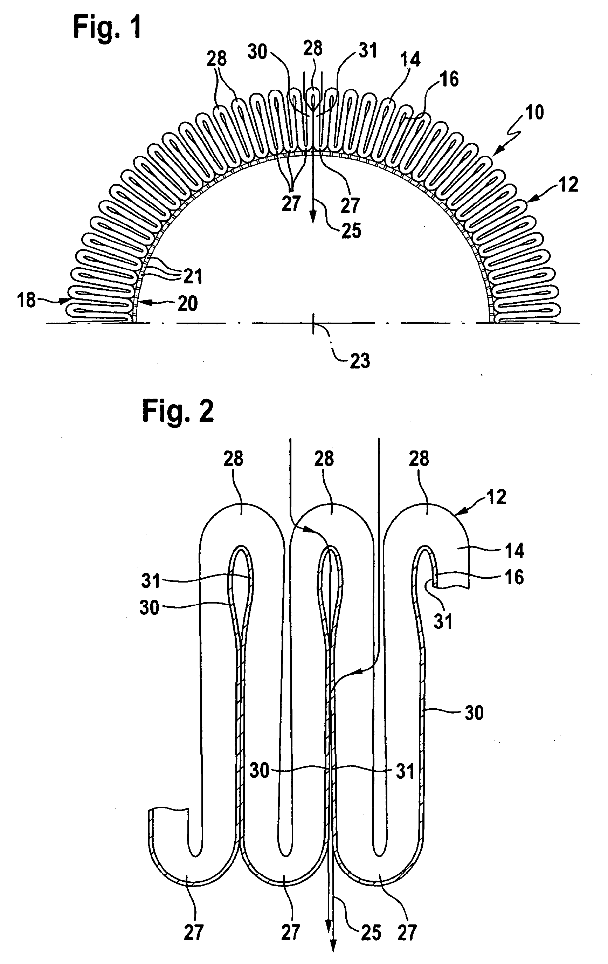

In Figur 1 ist in Form einer rein schematischen Darstellung ein Filterelement 10 dargestellt mit einem sternförmig gefalteten Flachmaterial 12, das wie aus Figur 2 deutlich wird, eine Funktionsschicht in Form einer Filterschicht 14 und eine Stützschicht in Form eines Stützgewebes 16 umfasst. Das gefaltete Flachmaterial 12 bildet einen hohlzylindrischen, in Umfangsrichtung in sich geschlossenen Balg 18 aus, von dem in Figur 1 zur Erzielung einer besseren Übersicht nur eine Hälfte dargestellt ist. Der Balg 18 stützt sich innenseitig an einem Stützrohr 20 ab, das eine Vielzahl von Durchbrechungen 21 aufweist. Die Längsachse des Stützrohrs 20 ist koaxial zur Zylinderachse 23 des Balges 18 ausgerichtet.

Die Filterschicht 14 ist vorzugsweise mehrlagig ausgebildet und umfasst eine Feinfilterschicht aus einen Vliesmaterial, die beidseitig von einer Grobfilterschicht abgedeckt ist. Eine derartige Filterschicht ist dem Fachmann an sich bekannt, die mehrlagige Ausgestaltung der Filterschicht 14 ist daher in der Zeichnung nicht im Detail dargestellt.

Die Filterschicht 14 wird in Kombination mit dem Stützgewebe 16 radial von außen nach innen von einem Fluid durchströmt, im dargestellten Ausführungsbeispiel von Hydrauliköl. Die Strömungsrichtung des Hydrauliköls ist in den Figuren 1 und 2 schematisch durch den Pfeil 25 dargestellt. Die Erfindung ist selbstverständlich nicht auf diese Strömungsrichtung beschränkt.

Das gesamte Flachmaterial 12 ist derart gefaltet, dass sich in Umfangsrichtung des Balges 18 Faltenspitzen 27 und Faltengründe 28 abwechseln. Die Faltenspitzen 27 sind aufgrund der Strömungsrichtung 25 des hindurchströmenden Hydrauliköls radial innenseitig angeordnet und die Faltengründe 28 sind radial außenseitig angeordnet. Zwischen den Faltenspitzen 27 und den Faltengründen 28 verläuft jeweils eine Faltenflanke 30 bzw. 31 des Flachmaterials 12.

Das Stützgewebe 16 stützt die Filterschicht 14 auf der Abströmseite des Fluids, also auf der dem Stützrohr 20 zugewandten Seite ab.

Die sternförmige Ausgestaltung des Balges 18 ist in Figur 1 nur sehr grob schematisch dargestellt. Tatsächlich ist das Flachmaterial 12, damit es eine möglichst große wirksame Oberfläche aufweist, sehr eng gefaltet, so dass abströmseitig einander benachbarte Faltenflanken 30, 31 in sehr geringem Abstand zueinander angeordnet sind. Wird das gefaltete Flachmaterial 12 von Hydrauliköl durchströmt, so verformt es sich derart, dass abströmseitig einander zugewandte Faltenflanken 30, 31 zumindest bereichsweise aneinander anliegen. Dies ist in Figur 2 schematisch dargestellt. Abströmseitig einander zugewandte Faltenflanken 30, 31 des Stützgewebes 16 berühren sich somit zumindest in Teilbereichen.

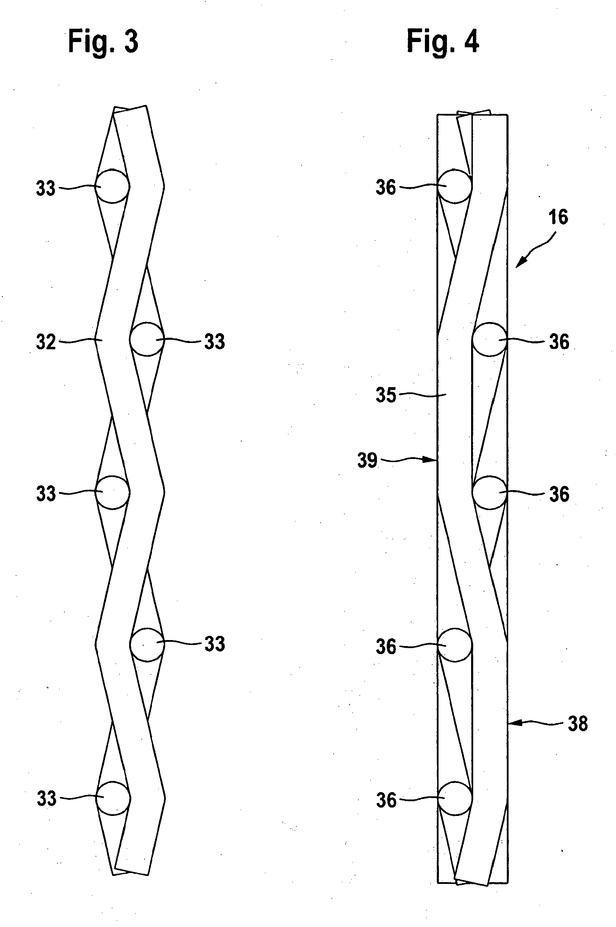

Das Stützgewebe 16 weist eine Köperbindung auf. Figur 4 veranschaulicht den Aufbau des zum Einsatz kommenden Stützgewebes mit Köperbindung. Zum besseren Vergleich ist in Figur 3 ein aus dem Stand bekanntes Stützgewebe mit Leinwandbindung dargestellt. Bei einer Leinwandbindung verläuft der Schussfaden 32 abwechselnd über und unter einem Kettfaden 33. Im Gegensatz hierzu verläuft der Schussfaden 35 des erfindungsgemäß zum Einsatz kommenden Stützgewebes 16 im dargestellten Ausführungsbeispiel unter zwei Kettfäden 36 hindurch, um danach über zwei Kettfäden 36 hinweg zu verlaufen, dann wieder zwei Kettfäden 36 zu untergreifen und so weiter. Der unmittelbar benachbarte Schussfaden verlagert diesen Rhythmus um eins zur Seite. Schusshebungen 38 erstrecken sich somit über zwei benachbarte Kettfäden, entsprechendes gilt für Schusssenkungen 39.

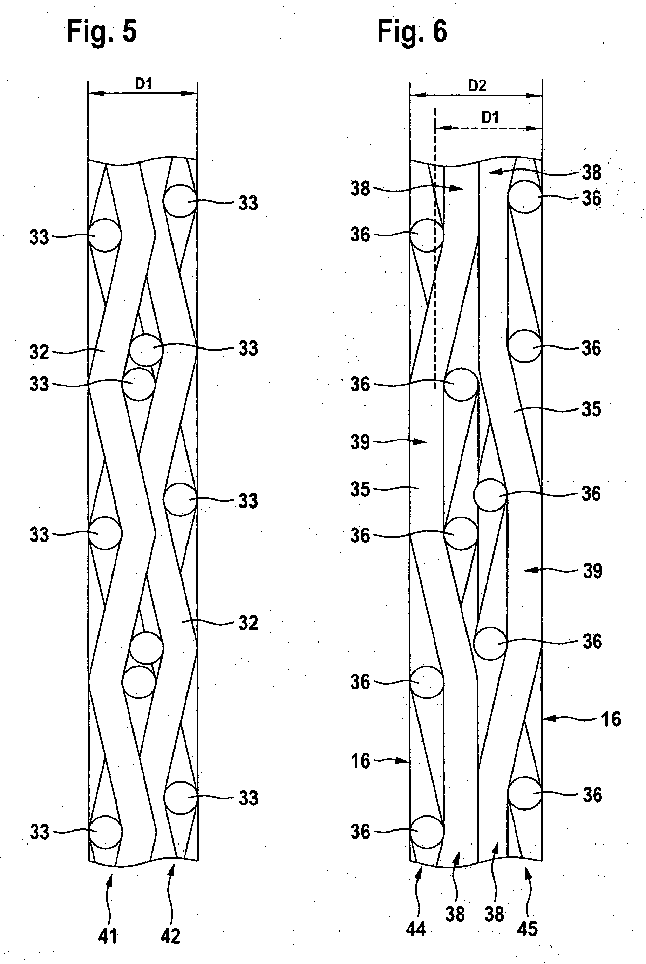

Kommen zwei Lagen 41, 42 eines Gewebes in Leinwandbindung, wie dies schematisch in Figur 5 dargestellt ist, durch Falten- oder Wellenbildung unmittelbar aneinander zur Anlage, so kann durch eine leichte Relativverschiebung der beiden Lagen 41, 42 eine sehr dichte Packung gebildet werden, deren Dicke D1 kleiner ist als die Summe der Dicken der einzelnen Lagen 41 und 42.

Kommen dagegen zwei Lagen 44, 45 des erfindungsgemäß zum Einsatz kommenden Stützgewebes 16 mit Köperbindung durch Falten- oder Wellenbildung unmittelbar aneinander zur Anlage, wie dies schematisch in Figur 6 dargestellt ist, so liegen in Abströmrichtung hervorstehende Faden- oder Filamentabschnitte, insbesondere einander zugewandte und sich kreuzende Kett- und Schusshebungen, aneinander an. Die Gesamtdicke D2 der durch Falten- oder Wellenbildung aneinander liegenden Lagen 44, 45 des Gewebes mit Köperbindung ist höher als die Gesamtdicke D1 der durch Falten- oder Wellenbildung aneinander anliegenden Lagen 41, 42 des Gewebes mit Leinwandbindung. Zwischen den durch Falten- oder Wellenbildung aneinander anliegenden Lagen 44, 45 des Gewebes mit Köperbindung bilden sich Mikrokanäle aus, die auch durch eine leichte Relativbewegung der beiden Lagen 44, 45 nicht beeinträchtigt werden sondern ihre Ausgestaltung stabil beibehalten.

Wie bereits erläutert, umfasst das Filterelement 10 ein Flachmaterial 12 mit einem Stützgewebe 16, das in Köperbindung gewoben ist. Das Stützgewebe 16 ist ebenso wie die Filterschicht 14 verformbar ausgestaltet, so dass sich also das gesamte Flachmaterial 12 verformen kann. Beim radialen Hindurchströmen von Hydrauliköl können abströmseitig einander zugewandte Faltenflanken 30, 31 bereichsweise aneinander anliegen, wie dies in Figur 2 schematisch dargestellt ist. In den abströmseitig aneinander anliegenden Bereichen der Faltenflanken 30, 31 bildet sich aufgrund der zum Einsatz kommenden Köperbindung für das Stützgewebe 16 die voranstehend beschriebene und in Figur 6 veranschaulichte Struktur aus mit aneinander anliegenden abströmseitigen Ketthebungen und Schusshebungen und im Wesentlichen radial zur Zylinderachse 23 verlaufenden stabilen Mikrokanälen, durch die die Hydraulikflüssigkeit hindurchströmen kann.

Die Schussfäden 32 des Stützgewebes 16 verlaufen parallel zu den Falten des Flachmaterials 12, d. h. sie verlaufen in axialer Richtung des Balges 18, und die Kettfäden 33 verlaufen senkrecht zu den Falten, d. h. in Umfangsrichtung des Balges. Die Maschenweite der Schussfäden 32 ist größer als die Maschenweite der Kettfäden 33, beispielsweise kann die Maschenweite der Schussfäden 32 um etwa ein Drittel größer sein als die Maschenweite der Kettfäden 33. Die sich ausbildenden Mikrokanäle verlaufen in radialer Richtung, also senkrecht zu den Schussfäden 32.

Das erfindungsgemäße Filterelement 10 zeichnet sich durch einen verhältnismäßig geringen Durchflusswiderstand für das Hydrauliköl aus, und trotzdem weist es eine hohe mechanische Stabilität auf. Die mechanische Stabilität wird durch den Einsatz des verformbaren Stützgewebes 16 und der verformbaren Filterschicht 14 erzielt, wobei abströmseitig einander zugewandte Faltenflanken 30, 31 des Stützgewebes 16 zumindest bereichsweise aneinander anliegen können. Dadurch wird eine mechanisch stabile Struktur des Balges 18 erzielt. Trotz dieser hohen mechanischen Stabilität kann das Hydrauliköl mit geringem Druckverlust durch das Flachmaterial 12 hindurchströmen, da sich im Bereich der abströmseitig aneinander anliegenden Faltenflanken 30, 31 aufgrund des Köpergewebes radial zur Zylinderachse 23 verlaufende Mikrokanäle ausbilden, durch die das Hydrauliköl mit verhältnismäßig geringem Strömungsverlust hindurchströmen kann.

Der Einsatz des Flachmaterials 12 ist nicht auf den zylindrischen Balg 18 beschränkt. Das Flachmaterial 12 mit Filterschicht 14 und Stützgewebe 16 kann auch ein so genanntes Flachfaltenfilter ausbilden, das sich entlang einer Ebene erstreckt oder auch entlang einer gekrümmten Oberfläche, die vorzugsweise von einem Stützblech mit einer Vielzahl von Durchbrechungen gebildet wird.

Ein gefaltetes Flachmaterial mit einer Funktionsschicht und einem diese in Durchströmungsrichtung abstützenden Stützgewebe mit einer Köperbindung kann auch zum Anreichern eines Fluids mit einer Chemikalie zum Einsatz kommen. Hierzu kann das Flachmaterial mit der Chemikalie getränkt werden und beim Hindurchströmen eines Fluids, vorzugsweise einer Flüssigkeit, löst sich die Chemikalie in dosierter Menge in der Flüssigkeit auf. Auch in diesem Falle kann durch den Einsatz eines Stützgewebes mit Köperbindung der Durchflusswiderstand des gefalteten Flachmaterials gering gehalten werden aufgrund der Ausbildung von Mikrokanälen, die in Strömungsrichtung ausgerichtet sind.

## Patentansprüche

1. Gewelltes oder gefaltetes Flachmaterial mit einer Vielzahl von parallel zueinander verlaufenden Falten oder Wellen, die aufeinander folgend eine Falten- oder Wellenspitze und einen Falten- oder Wellengrund definieren, welche über eine Faltenflanke miteinander verbunden sind, wobei das Flachmaterial von einem Fluid durchströmbar ist und mindestens eine verformbare Funktionsschicht aufweist, die in Durchströmungsrichtung des Fluids auf einer ein verformberes Stützgewebe aufweisenden Stützschicht aufliegt, wobei mittels der Funktionsschicht Fremdstoffe aus dem Fluid entfernbar oder diesem zuführba sind, **dadurch gekennzeichnet, dass** das Stützgewebe (16) eine Köperbindung aufweist.

2. Flachmaterial nach Anspruch 1, **dadurch gekennzeichnet, dass** in Abströmrichtung hervorstehende Faden- oder Filamentabschnitte des Stützgewebes im Bereich einander zugewandter Faltenflanken (30) des Flachmaterials (12) bei Belastung durch das hindurchströmende Fluid zumindest bereichsweise aneinander anliegen.

3. Flachmaterial nach Anspruch 1 oder 2, **dadurch gekennzeichnet, dass** das Flachmaterial (12) einen hohlzylindrischen, in Umfangsrichtung in sich geschlossenen Balg (18) ausbildet mit axial verlaufenden Faltenspitzen (27) und Faltengründen (28), der in radialer Richtung vom Fluid durchströmbar ist.

4. Flachmaterial nach Anspruch 1, 2 oder 3, **dadurch gekennzeichnet, dass** das Stützgewebe (16) parallel zu den Falten oder Wellen verlaufende Fäden (36) aus Metall und senkrecht zu den Falten oder Wellen verlaufende Fäden (35) aus einem Kunststoffmaterial umfasst.

5. Flachmaterial nach einem der voranstehenden Ansprüche, **dadurch gekennzeichnet, dass** die Schussfäden (36) des Stützgewebes (16) parallel zu den Falten oder Wellen und die Kettfäden (35) des Stützgewebes (16) senkrecht zu den Falten oder Wellen verlaufen.

6. Flachmaterial nach einem der voranstehenden Ansprüche, **dadurch gekennzeichnet, dass** die Fadendichte und/oder die Fadenstärke der parallel zu den Falten oder Wellen verlaufenden Fäden des Stützgewebes (16) kleiner ist als die Fadendichte bzw. Fadenstärke der senkrecht zu den Falten oder Wellen des Stützgewebes verlaufenden Fäden.

7. Flachmaterial nach einem der voranstehenden Ansprüche, **dadurch gekennzeichnet, dass** die Maschenweite der parallel zu den Falten oder Wellen verlaufenden Fäden größer ist als die Maschenweite der senkrecht zu den Falten oder Wellen verlaufenden Fäden.

8. Flachmaterial nach einem der voranstehenden Ansprüche, **dadurch gekennzeichnet, dass** die Funktionsschicht (14) ein Filtermaterial aufweist.

9. Flachmaterial nach Anspruch 8, **dadurch gekennzeichnet, dass** das Stützgewebe (16) praktisch keine Filterfunktion aufweist.

10. Flachmaterial nach einem der voranstehenden Ansprüche, **dadurch gekennzeichnet, dass** die Funktionsschicht (14) mehrlagig ausgestaltet ist.

11. Flachmaterial nach einem der voranstehenden Ansprüche, **dadurch gekennzeichnet, dass** die Köperbindung als Wechselköper ausgestaltet ist.

12. Flachmaterial nach einem der voranstehenden Ansprüche, **dadurch gekennzeichnet, dass** der Durchmesser der Fäden des Stützgewebes maximal 60 % der Maschenweite beträgt.

13. Verwendung eines Stützgewebes (16) zum abströmseitigen Abstützen einer gefalteten oder gewellten Funktionsschicht (14) mit einer Vielzahl von parallel zueinander verlaufenden Falten oder Wellen, die aufeinander folgend eine Falten- oder Wellenspitze (27) und einen Falten- oder Wellengrund (28) definieren, welche über eine Faltenflanke (30) miteinander verbunden sind, wobei die Funktionsschicht (14) verformbar ist und von einem Fluid durchströmbar ist, wobei mittels der Funktionsschicht (14) Fremdstoffe aus dem Fluid entfernbar oder diesem zuführbar sind und das Stützgewebe (16) abströmseitig an der Funktionsschicht (14) anliegt und ebenso wie die Funktionsschicht (14) gefaltet oder gewellt ist, und wobei das Stützgewebe (16) verformbar ist und eine Köperbindung aufweist.

14. Verwendung eines Stützgewebes nach Anspruch 13, **dadurch gekennzeichnet, dass** in Abströmrichtung hervorstehende Faden- oder Filamentabschnitte des Stützgewebes (16) im Bereich einander zugewandter Faltenflanken (30) bei Belastung durch das hindurchströmende Fluid zumindest bereichsweise aneinander anlegen.

15. Verwendung eines Stützgewebes nach Anspruch 13 oder 14, **dadurch gekennzeichnet, dass** das Stützgewebe parallel zu den Falten oder Wellen verlaufende Fäden (36) aus Metall und senkrecht zu den Falten oder Wellen verlaufende Fäden (35) aus Kunststoffmaterial umfasst.

16. Verwendung eines Stützgewebes nach Anspruch 13, 14 oder 15, **dadurch gekennzeichnet, dass** die Schussfäden (36) des Stützgewebes (16) parallel zu den Falten oder Wellen und die Kettfäden (35) des Stützgewebes (16) senkrecht zu den Falten oder Wellen verlaufen.

17. Verwendung eines Stützgewebes nach einem der Ansprüche 13 bis 16, **dadurch gekennzeichnet, dass** die Fadendichte und/oder die Fadenstärke der parallel zu den Falten oder Wellen des Stützgewebes (16) verlaufenden Fäden kleiner ist als die Fadendichte bzw. Fadenstärke der senkrecht zu den Falten oder Wellen des Stützgewebes (16) verlaufenden Fäden.

18. Verwendung eines Stützgewebes (16) nach einem der Ansprüche 13 bis 17, **dadurch gekennzeichnet, dass** das Stützgewebe (16) praktisch keine Filterfunktion aufweist.

## Claims

1. Corrugated or pleated flat material with a plurality of pleats or corrugations that run parallel to one another and successively define a pleat or corrugation peak and a pleat or corrugation valley, the peak and valley being connected to one another by way of a pleat flank, a fluid being able to flow through the flat material and the flat material having at least one deformable functional layer which rests on a supporting layer, comprising a deformable supporting fabric, in the direction of throughflow of the fluid, the functional layer allowing foreign substances to be removed from or delivered to the fluid, **characterized in that** the supporting fabric (16) comprises a twill weave.

2. Flat material according to claim 1, **characterized in that**, in the region where pleat flanks (30) of the flat material (12) are facing one another, thread or filament portions of the supporting fabric that protrude in the outflow direction at least partially abut one another when subjected to loading by the fluid flowing through.

3. Flat material according to claim 1 or 2, **characterized in that** the flat material (12) forms a hollow-cylindrical, circumferentially closed bellows (18) with axially running pleat peaks (27) and pleat valleys (28), the fluid being able to flow through the bellows in the radial direction.

4. Flat material according to claim 1, 2 or 3, **characterized in that** the supporting fabric (16) comprises threads (36) made of metal running parallel to the pleats or corrugations and threads (35) made of a plastics material running perpendicularly to the pleats or corrugations.

5. Flat material according to one of the preceding claims, **characterized in that** the weft threads (36) of the supporting fabric (16) run parallel to the pleats or corrugations and the warp threads (35) of the supporting fabric (16) run perpendicularly to the pleats or corrugations.

6. Flat material according to one of the preceding claims, **characterized in that** the density and/or the thickness of the threads of the supporting fabric (16) that run parallel to the pleats or corrugations is less than the density or thickness of the threads running perpendicularly to the pleats or corrugations of the supporting fabric.

7. Flat material according to one of the preceding claims, **characterized in that** the mesh width of the threads running parallel to the pleats or corrugations is greater than the mesh width of the threads running perpendicularly to the pleats or corrugations.

8. Flat material according to one of the preceding claims, **characterized in that** the functional layer (14) comprises a filter material.

9. Flat material according to claim 8, **characterized in that** the supporting fabric (16) has virtually no filtering function.

10. Flat material according to one of the preceding claims, **characterized in that** the functional layer (14) is of a multi-ply configuration.

11. Flat material according to one of the preceding claims, **characterized in that** the twill weave is configured as an alternating twill.

12. Flat material according to one of the preceding claims, **characterized in that** the diameter of the threads of the supporting fabric is at most 60% of the mesh width.

13. Use of a supporting fabric (16) for providing support on the outflow side for a pleated or corrugated functional layer (14) with a plurality of pleats or corrugations that run parallel to one another and successively define a pleat or corrugation peak (27) and a pleat or corrugation valley (28), the peak and valley being connected to one another by way of a pleat flank (30), the functional layer (14) being deformable and a fluid being able to flow through it, the functional layer (14) allowing foreign substances to be removed from or delivered to the fluid and the supporting fabric (16) engaging against the functional layer (14) on the outflow side and being pleated or corrugated in the same way as the functional layer (14), and the supporting fabric (16) being deformable and comprising a twill weave.

14. Use of a supporting fabric according to claim 13, **characterized in that**, in the region where pleat flanks (30) are facing one another, thread or filament portions of the supporting fabric (16) that protrude in the outflow direction at least partially abut one another when subjected to loading by the fluid flowing through.

15. Use of a supporting fabric according to claim 13 or 14, **characterized in that** the supporting fabric comprises threads (36) made of metal running parallel to the pleats or corrugations and threads (35) made of a plastics material running perpendicularly to the pleats or corrugations.

16. Use of a supporting fabric according to claim 13, 14 or 15, **characterized in that** the weft threads (36) of the supporting fabric (16) run parallel to the pleats or corrugations and the warp threads (35) of the supporting fabric (16) run perpendicularly to the pleats or corrugations.

17. Use of a supporting fabric according to one of claims 13 to 16, **characterized in that** the density and/or the thickness of the threads running parallel to the pleats or corrugations of the supporting fabric (16) is less than the density or thickness of the threads running perpendicularly to the pleats or corrugations of the supporting fabric (16).

18. Use of a supporting fabric (16) according to one of claims 13 to 17, **characterized in that** the supporting fabric (16) has virtually no filtering function.

## Revendications

1. Matériau plat ondulé ou plissé possédant une pluralité de plis ou d'ondulations s'étendant parallèlement les uns aux autres, qui définissent les uns à la suite des autres une crête de pli ou d'ondulation et une gorge de pli ou d'ondulation, lesquelles sont reliées les unes aux autres par les flancs (30) de pli, ce matériau plat pouvant être inondé par un fluide et présentant au moins une couche fonctionnelle déformable placée dans le sens de l'écoulement du fluide sur une couche de support possédant une texture de support déformable, des substances étrangères étant extraites du fluide ou étant introduites dans le fluide au moyen de ladite couche fonctionnelle, **caractérisé en ce que** la texture de support (16) est constituée d'une armure sergée.

2. Matériau plat selon la revendication 1, **caractérisé en ce que** des parties de fil ou de filament de la texture de support faisant saillie dans le sens de l'évacuation dans la zone des flancs de pli (30) tournés les uns vers les autres du matériau plat (12) s'appliquent les unes contre les autres au moins par endroits lorsqu'elles sont exposées à l'action du fluide les inondant.

3. Matériau plat selon la revendication 1 ou 2, **caractérisé en ce que** le matériau plat (12) forme un soufflet (18) de forme cylindrique creuse fermé sur lui-même dans la direction circonférentielle, pourvu de crêtes de pli (27) et de creux de pli (28) s'étendant axialement, ledit soufflet pouvant être inondé de fluide dans la direction radiale.

4. Matériau plat selon la revendication 1, 2 ou 3, **caractérisé en ce que** la texture de support (16) comprend des fils (36) en métal s'étendant parallèlement aux plis ou aux ondulations et des fils (35) en matière plastique s'étendant perpendiculairement aux plis ou aux ondulations.

5. Matériau plat selon l'une quelconque des revendications précédentes, **caractérisé en ce que** les fils de trame (36) de la texture de support (16) s'étendent parallèlement aux plis ou aux ondulations et les fils de chaîne (35) de la texture de support (16) s'étendent perpendiculairement aux plis ou aux ondulations.

6. Matériau plat selon l'une quelconque des revendications précédentes, **caractérisé en ce que** la densité et/ou l'épaisseur des fils de la texture de support (16) s'étendant parallèlement aux plis ou aux ondulations sont inférieures à la densité ou à l'épaisseur des fils s'étendant perpendiculairement aux plis ou aux ondulations de la texture de support.

7. Matériau plat selon l'une quelconque des revendications précédentes, **caractérisé en ce que** la largeur de maille des fils s'étendant parallèlement aux plis ou aux ondulations est supérieure à la largeur de maille des fils s'étendant perpendiculairement aux plis ou aux ondulations.

8. Matériau plat selon l'une quelconque des revendications précédentes, **caractérisé en ce que** la couche fonctionnelle (14) comprend un matériau filtrant.

9. Matériau plat selon la revendication 8, **caractérisé en ce que** la texture de support (16) ne présente quasiment pas de fonction filtrante.

10. Matériau plat selon l'une quelconque des revendications précédentes, **caractérisé en ce que** la couche fonctionnelle (14) présente plusieurs couches.

11. Matériau plat selon l'une quelconque des revendications précédentes, **caractérisé en ce que** l'armure sergée est réalisée sous la forme d'un sergé alterné.

12. Matériau plat selon l'une quelconque des revendications précédentes, **caractérisé en ce que** le diamètre des fils de la texture de support atteint au maximum 60 % de la largeur de maille.

13. Utilisation d'une texture de support (16) pour le soutien côté évacuation d'une couche fonctionnelle (14) plissée ou ondulée possédant une pluralité de plis ou d'ondulations s'étendant parallèlement les uns aux autres, qui définissent les uns à la suite des autres une crête de pli ou d'ondulation (27) et une gorge de pli ou d'ondulation (28), lesquelles sont reliées les unes aux autres par les flancs (30) de pli, cette couche fonctionnelle (14) étant déformable et pouvant être inondée par un fluide, des substances étrangères pouvant être extraites du fluide ou étant introduites dans le fluide au moyen de ladite couche fonctionnelle (14), et la texture de support (16) s'appliquant côté évacuation contre la couche fonctionnelle (14) et étant plissée ou ondulée de la même façon que la couche fonctionnelle (14), et la texture de support (16) étant déformable et étant constituée d'une armure sergée.

14. Utilisation d'une texture de support selon la revendication 13, **caractérisée en ce que** des parties de fil ou de filament de la texture de support (16) faisant saillie dans le sens de l'évacuation dans la zone des flancs de pli (30) tournés les uns vers les autres s'appliquent les unes contre les autres au moins par endroits lorsqu'elles sont exposées à l'action du fluide les inondant.

15. Utilisation d'une texture de support selon la revendication 13 ou 14, **caractérisée en ce que** la texture de support comprend des fils (36) en métal s'étendant parallèlement aux plis ou aux ondulations et des fils (35) en matière plastique s'étendant perpendiculairement aux plis ou aux ondulations.

16. Utilisation d'une texture de support selon la revendication 13, 14 ou 15, **caractérisée en ce que** les fils de trame (36) de la texture de support (16) s'étendent parallèlement aux plis ou aux ondulations et les fils de chaîne (35) de la texture de support (16) s'étendent perpendiculairement aux plis ou aux ondulations.

17. Utilisation d'une texture de support selon l'une quelconque des revendications 13 à 16, **caractérisée en ce que** la densité et/ou l'épaisseur des fils s'étendant parallèlement aux plis ou aux ondulations de la texture de support (16) sont inférieures à la densité ou à l'épaisseur des fils s'étendant perpendiculairement aux plis ou aux ondulations de la texture de support (16).

18. Utilisation d'une texture de support (16) selon l'une quelconque des revendications 13 à 17, **caractérisée en ce que** la texture de support (16) ne présente quasiment pas de fonction filtrante.
